# EUROPEAN PATENT SPECIFICATION

(11) **EP 0 556 991 B1**
(45) Date of publication and mention of the grant of the patent: **16.10.1996**
(21) Application number: 93300899.7
(22) Date of filing: 08.02.1993
(51) Int. Cl.: G05B 19/04, G01R 31/02

(54) **Sensor connection system**
Sensorverbindungssystem
Système de connexion de capteur

(30) Priority: 19.02.1992 US 837738
(43) Date of publication of application: 25.08.1993
(73) Proprietor: NAMCO CONTROLS CORPORATION, Mentor, Ohio 44060 (US)
(72) Inventor: Everson, Harold W., Jr., Mentor, Ohio 44060 (US); Slaybaugh, Jon, Painesville, Ohio 44077 (US); Juda, Charles C., Hudson, Ohio 44236 (US)
(74) Representative: Harrison, Philippa Dinah

(56) References cited:
- EP-A- 0 068 482
- WO-A-89/09147
- GB-A- 2 115 577
- US-A- 3 982 180

## Description

The present invention relates to apparatus for connecting sensors to a control or monitoring system, in particular, apparatus having fault-detecting capabilities.

As computer process control and monitoring plays a larger role in the industrial environment, the capability to connect large quantities of sensors efficiently and reliably to a central location has become increasingly important.

In the past, the process control or monitor for a machine or process has fewer input devices and sensors. In this situation, it was acceptable to wire individually each sensor to the control.

As control and monitoring has become more complicated due to automation needs, sensor inputs have multiplied and the number of wires required has grown very large.

Rather than run individual electrical circuits between each sensor and the control, methods have been used that distribute groups of I/O modules into remote electrical boxes such that each I/O group places sensor outputs onto shared electrical circuits or buses that multiplex the signals back to the control.

It is relatively easy and economical to protect the bus from physical damage because it contains a relatively small number of conductors or other data transmission medium, and it need only directly communicate with each I/O group which are typically located farther from physical hazards.

On the other hand, each sensor must still be located near the condition to be sensed. Unfortunately, it is often too expensive and/or too difficult to protect fully the connection between the sensor and I/O group from physical hazards.

In practice, the connection between the sensors and the remote I/O group electrical box is often the portion of the control/monitoring system most likely to fail. Typically, this connection is in the form of flexible cables with a quick connectors on one end, the other end being hard-wired. While tough and sturdy, these cables are often damaged in the harsh industrial environment.

As process control/monitoring becomes more complicated, it becomes increasingly critical to determine whether a condition received from a remote device is the actual state of the sensor or due to a fault in the sensor or its cable. Not only is it desirable to determine if a cable fault exists, it is also important to be able to identify quickly which cable is faulty.

To minimise costs and complexity, several sensors can be connected to a conveniently located concentrator, which does the necessary transformation to place the sensors' information onto the bus.

EP-A-0068482 discloses a control system including a plurality of sensor units connected to a process monitoring or control system. Sensors and control elements are each provided with an encoder/decoder via which they are connected to a common bus, the bus being connected to a central controller. The sensors are simply switches and produce open or closed outputs.

GB-A-2115577 discloses a programmable controller also operable with a number of sensing devices. The devices are arranged such that a ground fault, though possibly destructive of the sensing device, will not cause an initiating signal to the controller.

The sensor connection system of the invention aims to provide for the efficient and effective connection of sensors to a central location and the detection of faults occurring in the sensors and the sensor cables.

The present invention provides a sensor connection system for connecting a plurality of contact sensor units to a process monitoring or control system, wherein each contact sensor produces an open or closed output corresponding to a sensed condition, the system comprising,
a respective sensor cable for connection at one end thereof to each sensor unit; each sensor unit providing a first impedance in response to a first sensed condition and a second impedance in response to a second sensed condition;
a concentrator having means for connecting each of said sensor cables thereto;
a bus connected to said concentrator; and
a controller connected to said bus;
characterised by:
said concentrator comprising circuit means producing for each sensor unit and its respective sensor cable connected thereto a first signal in response to said first impedance, a second signal in response to said second impedance and a third signal in response to an error impedance indicative of an open circuit or a short circuit condition in the respective sensor cable;
said circuit means further operating to couple said first, second and third signals for each sensor unit connected to said concentrator onto the bus in response to the controller. Each sensor unit effectively provides a first impedance in response to a first sensed condition or a second impedance in response to a second sensed condition. Neither of the impedances provided by the sensor units is indicative of a short circuit or an open circuit.

Each sensor unit is connected to a concentrator by a sensor cable preferably having quick connectors on each end.

The bus is connected to the concentrator for transmitting the signals. The controller causes the concentrator to provide the signals for each sensor unit to the controller. The controller provides a status for each sensor unit to the process monitoring or control system.

In the preferred embodiment, the controller provides a clock signal on the bus and the signals are transmitted a first time on the bus by time-division multiplexing in response to the clock signal.

After the first transmission of the signals, the signals are transmitted a second time on the bus in inverted logical form in further response to the clock signal. The first and second transmissions may be compared by the controller to detect transmission errors.

The bus may provide power from the controller to the concentrators and sensor units. This simplifies the wiring of the system, as no local power is needed.

The concentrators can be advantageously encapsulated for protection from environmental hazards.

Status lights may be provided on the controller and/or the concentrators. This allows rapid identification of system faults. A quick visual inspection shows operators and maintenance personnel where the problem is located. This allows maintenance crews to minimize down-time.

The controller preferably provides sensor status to the monitoring or control system on a plurality of parallel status lines corresponding to each sensor unit. This allows easy interfacing to existing control and monitoring systems. The status lines simply take the place of hard-wired sensors. No user programming is required.

It is also possible to provide the same signal information to the monitoring or control system by serial data transmission.

An adapter apparatus allows for the connection of contact closure type switch sensors to the connection system of the invention. The adapter apparatus includes a first impedance in series with the switch sensor and a second impedance in parallel with the sensor and first impedance. The apparatus provides the second impedance in response to the switch sensor being open or a third impedance in response to the switch sensor being closed. None of these impedances are a short circuit or an open circuit.

### BRIEF DESCRIPTION OF THE DRAWINGS

FIG. 1 is a block diagram of a sensor connection system according to the invention.

FIG. 2 is a block diagram of a connection system according to the invention showing the signals on the bus.

FIG. 3 is a combination schematic and block diagram of sensors and a concentrator according to the invention.

FIG. 4 is a block diagram of a controller according the invention.

FIG. 5 is a graph showing an exemplary logical data signal for one concentrator.

FIG. 6 is a graph showing an inverted logical data signal for the concentrator of FIG. 5.

FIG. 7 is a top plan view of a concentrator according to the invention.

FIG. 8 is a right side elevation view of the concentrator of FIG. 7.

### DESCRIPTION OF THE PREFERRED EMBODIMENTS

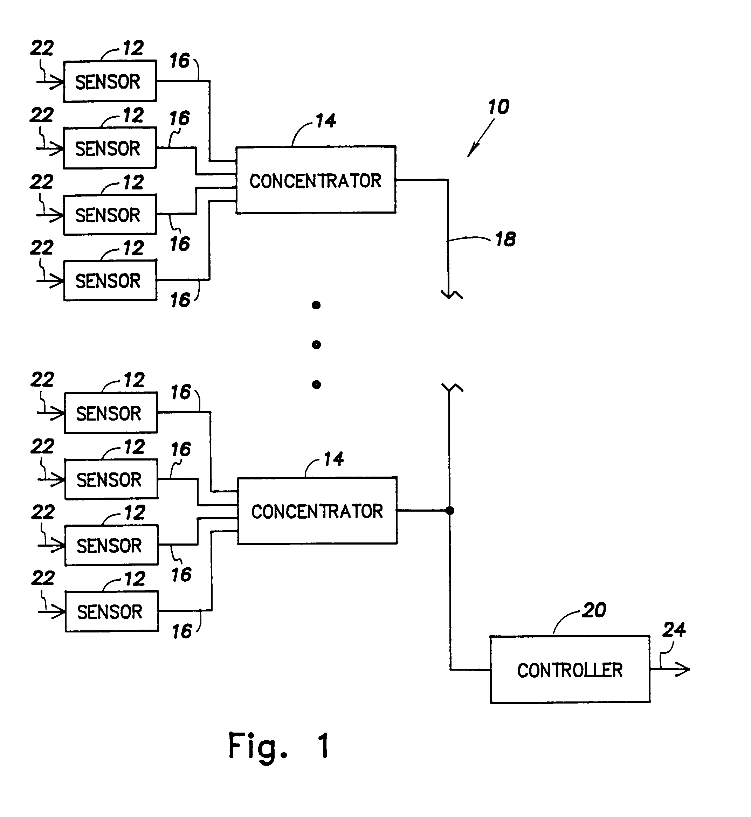

Referring to FIG. 1, a sensor connection system 10 is formed from groups of sensors 12 connected to concentrators 14 by sensor cables or cord sets 16. The concentrators 14 are connected to a bus 18 leading to a controller 20.

Conditions-to-be-sensed 22 act on each sensor 12 which then provides either an "on" or "off" indication. These individual indications are time-division multiplexed by the concentrators 14 onto the bus 18 under the control of the controller 20. As will be more fully set forth below, the concentrators 14 also time-division multiplex the "fault" or "no fault" condition of each of the cord sets 16 onto the bus 18.

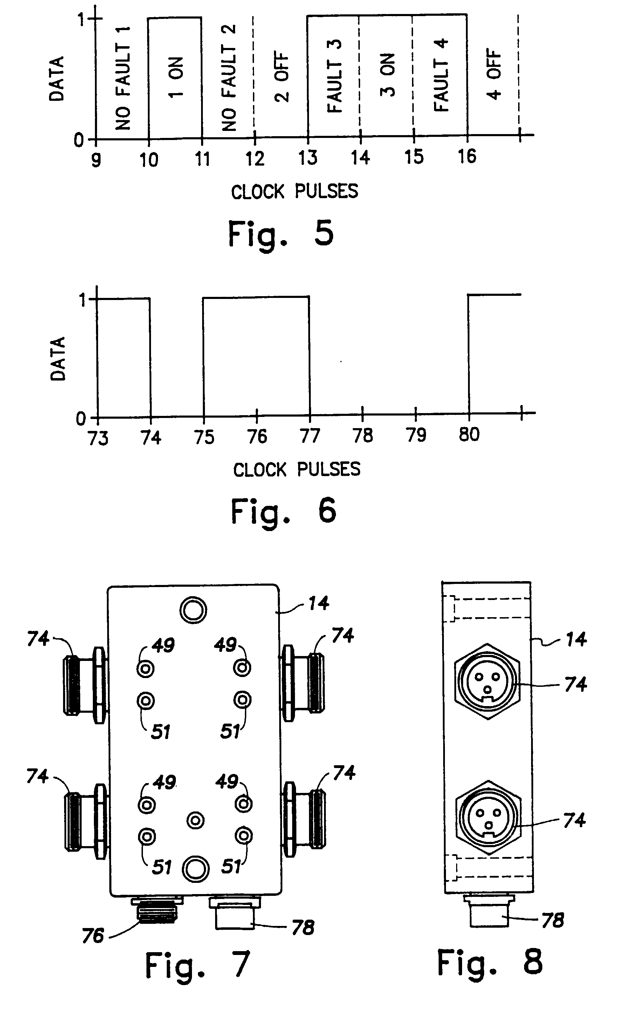

The controller 20 provides the state of the sensors 12 and cord sets 16 by a link 24 to a monitoring/control system 26 (FIG. 4).

In the preferred embodiment, four sensors 12 are connected to each concentrator 14 and eight concentrators 14 are connected to the bus 18.

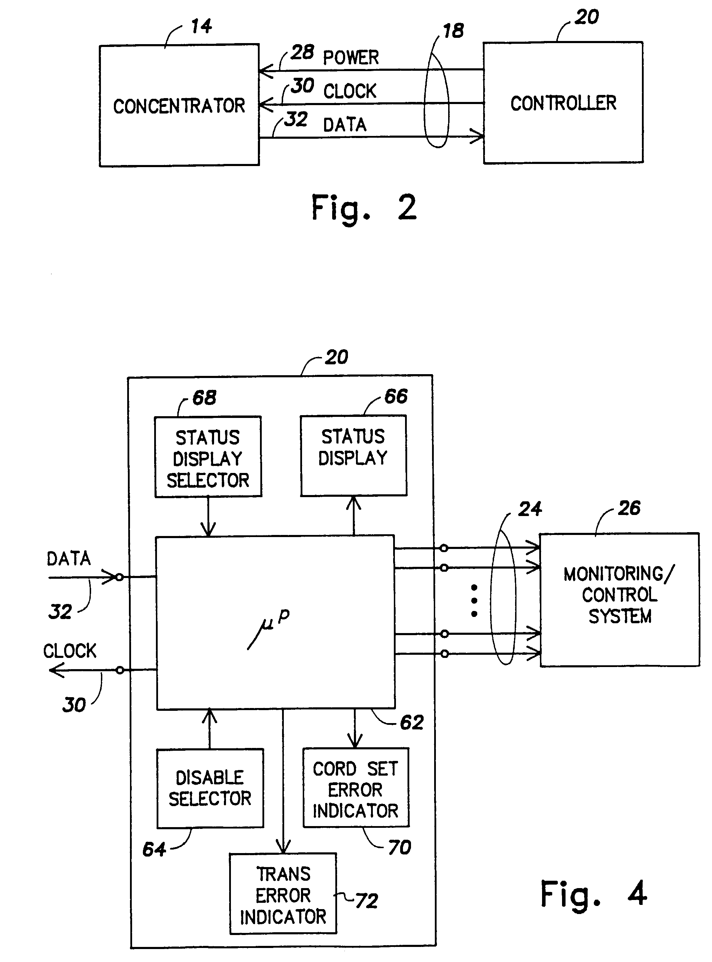

Referring to FIG. 2, the bus 18 is composed of conductors for power 28, clock 30 and data 32. The concentrators 14 are connected in parallel to the bus 18. The controller 20 provides power to operate the concentrators 14 and sensors 12 via the power conductors 28. The sensor connection system 10 is controlled by signals from the controller 20 on the clock conductors 28, which provide control and timing to each concentrator 14. The state of the sensors 12 and cord sets 16 is transmitted by the concentrators 14 to the controller 20 on the data conductors 32. Typically, the conductors 30, 32 will have characteristic impedance matching terminations on each end.

The power conductors may carry, for example, 30 volts d.c. The clock 30 and data 32 conductors may carry, for example, signals conforming to the RS485 standard. This standard uses a pair of conductors to carry a differentially encoded digital signal.

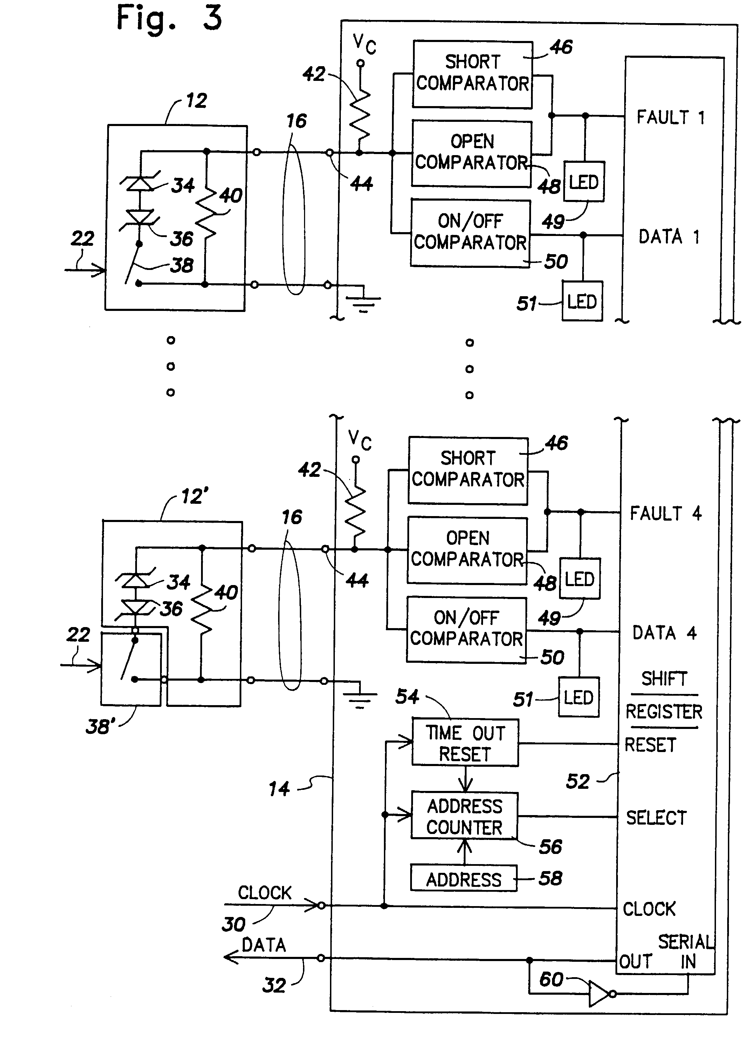

Referring to FIG. 3, an exemplary sensor 12 is composed of back-to-back zener diodes 34, 36 in series with a switch 38, all connected in parallel with a resistor 40. Other embodiments of the sensor 12 may be employed, as long as they exhibit the characteristics described below.

The condition-to-be-sensed 22 determines whether the switch 38 is "on" or "off."

The sensor 12 is connected to the concentrator 14 by a cord set 16. In the preferred embodiment, the cord sets 16 are commercially available pre-assembled cord sets having connectors at each end that mate with respective connectors on the concentrator 14 and sensors 12.

The concentrator 14 supplies a voltage V_{C} through a resistor 42 to the sensor 12. The voltage V_{C} may be, for example, 20 volts d.c. If the switch 38 is off, the voltage V_{C} is divided between the resistors 40, 42 which may be of such a ratio that, for example, the terminal 44 would be at 15 volts.

If the switch 38 is on, the voltage at the terminal 44 would be essentially determined by the zener voltage of the zener diodes 34, 36, for example, 10 volts. The diodes 34, 36 are connected in back-to-back configuration so that operation of the sensor 12 is not dependent on the polarity of the voltage applied to it.

The foregoing assumes that the cord set 16 is undamaged and functional. If the cord set 16 is open because, for example, it is not connected or has been broken, the voltage at the terminal 44 is at or near V_{C}. If on the other hand, the cord set 16 is shorted by, for example, crushing or other damage, the voltage at the terminal 44 is at or near 0 volts.

Thus, the voltage at the terminal 44 is indicative of the state of the sensor 12 (the switch 38 on or off) or the state of the cord set 16 (open or shorted). In order for state of the sensor 12 to be differentiated from that of the cord set 16, it must exhibit an impedance for its "on" state and for its "off" state that are not only different from each other, but also different from a shorted or open cord set.

The sensor 12 can be implemented in other ways, the important consideration being that it reliably provide an "off" impedance and an "on" impedance that are readily distinguishable from each other and from the impedances of a faulty cord set 16.

Existing switch-type sensors 38' can be employed with the sensor connection system 10 by eliminating the internal switch 38 of the sensor 12 and, instead, externally connecting the switch-type sensor 38' to a switch adapter 12' comprising the remaining portion of the sensor 12. This allows the retro-fitting of the connection system 10 to many existing sensors.

The logical state of the sensor 12 and cord set 16 are determined by a "short" comparator 46, an "open" comparator 48 and an "on/off" comparator 50.

If the voltage at the terminal 44 is below a threshold V_{S} (e.g., 8 volts), the short comparator 46 indicates a short in the cord set 16. If the voltage at the terminal 44 is above a threshold V_{O} (e.g., 17 volts), the open comparator 48 indicates an open in the cord set 16. If either a short or open is indicated, a logical error or fault signal is applied to a respective input to a shift register 52 (e.g., FAULT 1) by means of a "wired OR" and also to a fault indicator 49.

If the voltage at the terminal 44 is above a threshold V_{D}, the on\off comparator 50 indicates that the sensor 12 has sensed a first condition that has resulted in the switch 38 being off. If the voltage at the terminal 44 is below the threshold V_{D}, the on\off comparator 50 indicates that the sensor 12 has sensed a second condition that has resulted in the switch 38 being on. These conditions may be, for example, movement of a cam or lever, a pressure limit transducer, a proximity detector, etc. The on/off comparator 50 provides a logical signal representing the state of the sensor 12 to a respective input of the shift register 52 (e.g., DATA 1) and also to an indicator 51

The indicators 49, 51 may be, for example, LEDs or other light sources.

It should be noted that the comparator 50 will provide an indication of the switch 38 being open or closed even if the cord set 16 is open or shorted, respectively. However, if a fault signal is present, appropriate action can be taken to disregard the status of the sensor 12.

If for some reason only shorts or only opens in the cord set 16 are of interest, the open comparator 48 or the short comparator 36, respectively, can be eliminated.

Clock pulses from the controller 20 are provided on the clock conductors 30 (which are changed from RS485 signals to TTL signals by an unshown receiver). In the absence of a clock pulse for at least two pulse periods, the time out reset 54 resets the shift register 52 and the address counter 56.

The address counter 56 counts clock pulses after a reset. The counter 56 compares its count to a concentrator address 58. The counter 56 may be, for example, a 6-bit counter. The forth, fifth and sixth most significant bits can then be used to address up to eight different concentrators 14.

Once the count in the most significant bits of the counter 56 match the address 58, the shift register 52 reads the status of the sensors 12 and cord sets 16 and serially outputs that status on the data conductors 32 (the TTL signals are changed to RS485 signals by an unshown transmitter). At the same time the status is inverted by the inverter 60 and serially fed back into the shift register 52.

For example, if the address 58 of the concentrator 14 is "000", then for each of the first eight clock pulses (counter 56 counts from "000000" to "000111"), a data/fault bit is serially output from the shift register to the bus 18. Similarly, for a concentrator 14 with an address 58 of "010", eight data/fault bits would be output as the counter 56 counted pulses from "010000" to "010111."

For this example, the counter 56 wraps around after 64 clock pulses. Because the contents of the shift register 52 are inverted and fed back into the shift register 52, the whole process repeats for pulses 65 through 128, except that the logical status from each concentrator 14 is inverted.

Referring to FIG. 5, an exemplary graph of the logic data signal for the status of a concentrator 14 having an address 58 of "001" is shown. The graph indicates that a first sensor 12 is on and has no respective cord set 16 error, that a second sensor 16 is off and has no respective cord set 16 error and that the respective cord sets 16 of a third sensor 12 and a fourth sensor 12 are damaged (the status indicated for the sensors themselves thus being unreliable).

Referring to FIG. 6, the concentrator 14 producing FIG. 5 produces a logically inverted version of the signal of FIG. 5 in response to the second 64 clock pulses (for this concentrator, pulses 73 through 80).

In the manner described above, the status from individual concentrators 14 are time-division multiplexed onto the bus 18. For the first 64 clock pulses, the actual logical status is transmitted on the bus 18 and for the next 64 clock pulses the inverted logical status is transmitted. After 128 clock pulses, the process is repeated by the controller 20 delaying at least two clock pulse periods before again sending a stream of 128 pulses.

Referring to FIG. 4, a controller 20 includes a microprocessor 62 having on-chip RAM and program ROM. The microprocessor 62 supplies the clock pulses to the clock conductors 30 (the TTL signals are changed to RS485 signals by an unshown transmitter). The status data from the concentrators 14 are received by the microprocessor 62 from the data conductors 32 (the RS485 signals are changed to TTL signals by an unshown receiver).

A disable selector 64 is connected to the microprocessor 62 to instruct the microprocessor 62 to ignore the status of selected sensors 12. This allows the sensor connection system 10 to allow for sensors/concentrators that are not actually installed or to ignore chosen sensors. The selector 64 may be, for example, a series of individual switches.

A status display 66 displays the status of the sensor connection system 10 on, for example, LEDs. The particular status (e.g., sensor on/off status, cord set status, interconnect fault status, diagnostics, etc.) is selected by a status display selector 68 connected to the microprocessor 62.

In addition, whenever a cord set 16 error is detected, the microprocessor 62 provides an error indication on a cord set error indicator 70 (e.g., an LED).

The microprocessor 62 compares the status transmitted by the concentrators 14 in response to the first 64 pulses with that transmitted in response to the next 64 pulses (inverted status). If the status for each sensor 12 and cord set 16 for the first 64 bits and the second 64 bits do not exactly correspond to one another except for inversion, the microprocessor 62 indicates that a transmission error has occurred on a transmission error indicator 72 (e.g., an LED).

The microprocessor 62 also provides the status information to the monitoring/control system 26 by the link 24. Typically, the link 24 will be isolated and individually buffered parallel outputs corresponding to each of the sensors 12. Thus, to the monitoring/control system 26, it will be as if it is directly connected to each sensor. This allows the connection system 10 to be installed without the time, trouble or expense of changing the programming of an existing monitoring/control. system 26.

For added capability, the controller 20 can provide the monitoring/control system 26 with cord set and transmission error status. This can be used for alerting the machine operators and maintenance crews, who can also get the information from the status display 66. This greatly speeds correction of the problem, as once identified, a cord set 16 can be rapidly changed.

Another valuable advantage is that supplying the error status to the monitoring/control system 26 allows it to choose to ignore non-critical sensors or to shut down the system if critical sensors are lost.

Referring to FIGS. 7 and 8, a concentrator 12 is encapsulated to protect it from environmental hazards. Such materials as epoxy, rtv or polyurethane may be used as encapsulants.

Electrical connectors 74 mate with connectors on the ends of the cord sets 16. The bus 18 passes through the concentrator 14 via the connectors 76, 78, which mate with connectors on each segment of the bus 18.

## Claims

1. A sensor connection system (10) for connecting a plurality of contact sensor units (12, 38) to a process monitoring or control system (26), wherein each contact sensor (38) produces an open or closed output corresponding to a sensed condition (22), the system comprising,
a respective sensor cable (16) for connection at one end thereof to each sensor unit (12); each sensor unit (12) providing a first impedance (40) in response to a first sensed condition and a second impedance (34,36) in response to a second sensed condition;
a concentrator (14) having means (74) for connecting each of said sensor cables thereto;
a bus (18) connected to said concentrator (14); and
a controller (20) connected to said bus;
characterised by:
said concentrator (14) comprising circuit means (46,48,50) producing for each sensor unit (12) and its respective sensor cable (16) connected thereto a first signal in response to said first impedance, a second signal in response to said second impedance and a third signal in response to an error impedance indicative of an open circuit or a short circuit condition in the respective sensor cable;
said circuit means further operating to couple said first, second and third signals for each sensor unit connected to said concentrator onto the bus in response to the controller.

2. A system according to claim 1, wherein said concentrator (14) is encapsulated for protection from environmental hazards.

3. A system according to claim 1, further comprising a plurality of light sources (49,51) on at least one of said concentrator (14) and controller (20), said light sources providing visual indication of said logical signals.

4. A system according to claim 1, further comprising means for detecting an error in said transmitted signals.

5. A system according to claim 4, further comprising a light source on said controller, said light source providing visual indication of said detected error.

6. A system according to claim 1, wherein said controller (20) includes means for providing said status for each said sensor unit to said monitoring or control system on a plurality of parallel status lines corresponding to each said sensor unit.

7. A system according to claim 1 in which each sensor unit provides an open circuit to an applied signal in response to a first sensed condition or a short circuit to the applied signal in response to a second sensed condition, said system further comprising:
a first impedance (34,36) in series with said sensor device (38); and
a second impedance (40) in parallel with said sensor device (38) and first impedance (34,36), said apparatus providing said second impedance in response to said first sensed condition or a third impedance in response to said second sensed condition, none of said impedances being a short circuit or an open circuit.

8. A system according to claim 7, wherein said first impedance includes at least one zener diode (34,36) and said second impedance is a resistance (40).

## Patentansprüche

1. Sensorverbindungssystem (10) zum Verbinden einer Vielzahl von Kontaktsensoreinheiten (12, 38) zu einem Prozeßüberwachungs- oder Steuersystem (26), wobei jeder Kontaktsensor (38) einen offenen oder geschlossenen Ausgang entsprechend einem gefühlten Zustand (22) erzeugt, wobei das System
ein jeweiliges Sensor-Kabel (16) zur Verbindung eines Endes davon mit jeder Sensoreinheit (12); wobei jede Sensoreinheit (12) eine erste Impedanz (40) in Abhängigkeit eines ersten gefühlten Zustands und eine zweite Impedanz (34, 36) in Abhängigkeit eines zweiten gefühlten Zustands liefert;
einen Konzentrator (14), der eine Einrichtung (74) zum Verbinden jedes der Sensor-Kabel damit besitzt;
einen Bus (18), der mit dem Konzentrator (14) verbunden ist; und
eine Steuereinheit (20), die mit dem Bus verbunden ist:
aufweist,
gekennzeichnet dadurch,
daß der Konzentrator (14) eine Schaltkreiseinrichtung (46, 48, 50), die für jede Sensoreinheit (12) und deren jeweiliges Sensor-Kabel (16), das damit verbunden ist, ein erstes Signal in Abhängigkeit zu der ersten Impedanz, ein zweites Signal in Abhängigkeit zu der zweiten Impedanz und ein drittes Signal in Abhängigkeit zu einer Fehler-lmpedanz, die für einen offenen Schaltkreis- oder einen Kurzschlußkreis-Zutand in dem jeweiligen Sensor-Kabel indikativ ist, produziert;
daß die Schaltkreiseinrichtung weiterhin so arbeitet, um das erste, das zweite und das dritte Signal für jede Sensoreinheit, die mit dem Konzentrator verbunden ist, auf den Bus in Abhängigkeit von der Steuereinheit zu koppeln.

2. System nach Anspruch 1, wobei der Konzentrator (14) zum Schutz gegen Umgebungsgefahren eingekapselt ist.

3. System nach Anspruch 1, das weiterhin eine Vielzahl von Lichtquellen (49, 51) an mindestens einem des Konzentrators (14) und der Steuereinheit (20) aufweist, wobei die Lichtquellen eine visuelle Anzeige der logischen Signale liefern.

4. System nach Anspruch 1, das weiterhin Einrichtungen zum Erfassen eines Fehlers in den übertragenen Signalen aufweist.

5. System nach Anspruch 4, das weiterhin eine Lichtquelle an der Steuereinheit aufweist, wobei die Lichtquelle eine visuelle Anzeige des erfaßten Fehlers liefert.

6. System nach Anspruch 1, wobei die Steuereinheit (20) Einrichtungen zum Liefern des Status für jede der Sensoreinheiten zu dem Überwachungs- oder Steuersystem auf einer Vielzahl paralleler Status-Leitungen entsprechend zu jeder Sensoreinheit umfaßt.

7. System nach Anspruch 1, in dem jede Sensoreinheit einen offenen Schaltkreis zu einem zugeführten Signal in Abhängigkeit eines ersten, gefühlten Zustands, oder einen Kurzschlußschaltkreis zu dem zugeführten Signal in Abhängigkeit eines zweiten, gefühlten Zustands liefert, wobei das System weiterhin aufweist:
eine erste Impedanz (34, 36) in Reihe zu der Sensorvorrichtung (38); und
eine zweite Impedanz (40) parallel zu der Sensorvorrichtung (38) und der ersten Impedanz (34, 36), wobei das Gerät die zweite Impedanz in Abängigkeit zu dem ersten, gefühlten Zustand oder eine dritte Impedanz in Abhängigkeit von dem zweiten, gefühlten Zustand liefert, wobei keine der Impedanzen ein Kurzschlußkreis oder ein offener Schaltkreis ist.

8. System nach Anspruch 7, wobei die erste Impedanz mindestens eine Zener-Diode (34, 36) umfaßt und die zweite Impedanz ein Widerstand (40) ist.

## Revendications

1. Système de connexion de capteurs (10) pour raccorder une pluralité d'unités de capteurs de contact (12, 38) à un système de contrôle ou de commande de traitement (26) dans lequel chaque capteur de contact (38) produit une sortie ouverte ou fermée correspondant à une condition détectée (22), le système comprenant :
un câble de capteur respectif (16) pour raccorder à une extrémité de celui-ci chaque unité de capteurs (12) ; chaque unité de capteurs (12) fournissant une première impédance (40) en réponse à une première condition détectée et une seconde impédance (34, 36) en réponse à une seconde condition détectée ;
un concentrateur (14) ayant un moyen (74) pour raccorder chacun desdits câbles de capteur à celui-ci ;
un bus (18) raccordé audit concentrateur (14) ; et
un dispositif de commande (20) raccordé audit bus ;
caractérisé par :
ledit concentrateur (14) comprenant un moyen de circuit (46, 48, 50) produisant pour chaque unité de capteurs (12) et son câble de capteur respectif (16) raccordé à celui-ci, un premier signal en réponse à ladite première impédance, un second signal en réponse à ladite seconde impédance et un troisième signal en réponse à une impédance d'erreur indicatrice d'une condition de circuit ouvert ou de court-circuit dans le câble de capteur respectif ;
ledit moyen de circuit fonctionnant en outre pour coupler lesdits premier, second et troisième signaux pour chaque unité de capteurs raccordée audit concentrateur sur le bus en réponse au dispositif de commande.

2. Système selon la revendication 1, dans lequel ledit concentrateur (14) est enrobé pour le protéger contre les risques de l'environnement.

3. Système selon la revendication 1, comprenant en outre une pluralité de sources lumineuses (49, 51) sur au moins un dudit concentrateur (14) et dispositif de commande (20), desdites sources lumineuses fournissant une indication visuelle desdits signaux logiques.

4. Système selon la revendication 1, comprenant en outre un moyen pour détecter une erreur dans lesdits signaux transmis.

5. Système selon la revendication 4, comprenant en outre une source lumineuse dudit dispositif de commande, ladite source lumineuse fournissant une indication visuelle de ladite erreur détectée.

6. Système selon la revendication 1, dans lequel ledit dispositif de commande (20) comprend un moyen pour fournir ledit état pour chacune desdites unités de commande audit système de contrôle ou de commande sur une pluralité de lignes d'état parallèles correspondant à chacune desdites unités de capteurs.

7. Système selon la revendication 1, dans lequel chaque unité de capteurs fournit un circuit ouvert à un signal appliqué en réponse à une première condition détectée ou un court-circuit à un signal appliqué en réponse à une seconde condition détectée, ledit système comprenant en outre :
une première impédance (34, 36) en série avec ledit dispositif de capteur (38) ; et
une seconde impédance (40) en parallèle avec ledit dispositif de capteurs (38) et une première impédance (34, 36), ledit appareil fournissant ladite seconde impédance en réponse à ladite première condition détectée ou une troisième impédance en réponse à ladite seconde condition détectée, aucune desdites impédances n'étant un court-circuit ou un circuit ouvert.

8. Système selon la revendication 7, dans lequel ladite première impédance comprend au moins une diode zener (34, 36) et ladite seconde impédance est une résistance (40).
